# EUROPÄISCHE PATENTSCHRIFT

(11) **EP 1 317 803 B1**
(45) Veröffentlichungstag und Bekanntmachung des Hinweises auf die Patenterteilung: **24.11.2004**
(21) Anmeldenummer: 01976015.6
(22) Anmeldetag: 30.08.2001
(51) Int. Cl.: H04B 1/40, H04B 1/28, H04B 1/30

(54) **VERFAHREN ZUR SYSTEMUNABHÄNGIGEN DIGITALEN AUSWERTUNG VON MOBILKOMMUNIKATIONS-EMPFANGSSIGNALEN VERSCHIEDENER MOBILFUNKSTANDARDS**
METHOD FOR SYSTEM-INDEPENDENT DIGITAL EVALUATION OF MOBILE COMMUNICATION RECEPTION SIGNALS OF VARIOUS MOBILE RADIO STANDARDS
PROCEDE D'EVALUATION NUMERIQUE INDEPENDANT DU SYSTEME DE SIGNAUX DE RECEPTION DE COMMUNICATION MOBILE DE DIFFERENTES NORMES DE TELEPHONIE MOBILE

(30) Priorität: 14.09.2000 DE 10045546
(43) Veröffentlichungstag der Anmeldung: 11.06.2003
(73) Patentinhaber: Infineon Technologies AG, 81669 München (DE)
(72) Erfinder: KRÜGER, Martin, 80995 München (DE); WENZEL, Dietmar, 81549 München (DE)
(74) Vertreter: Graf Lambsdorff, Matthias, Dr.
(86) Internationale Anmeldenummer: PCT/DE2001/003391
(87) Internationale Veröffentlichungsnummer: WO 2002/023746

(56) Entgegenhaltungen:
- WO-A-94/05087
- WO-A-99/09721
- GUNN J E ET AL: "A LOW-POWER DSP CORE-BASED SOFTWARE RADIO ARCHITECTURE" IEEE JOURNAL ON SELECTED AREAS IN COMMUNICATIONS, IEEE INC. NEW YORK, US, Bd. 17, Nr. 4, April 1999 (1999-04), Seiten 574-590, XP000824304 ISSN: 0733-8716

## Beschreibung

Die Erfindung bezieht sich generell auf Signalprozessoren für die Mobilkommunikation und auf entsprechende digitale Verfahren zur Auswertung von Mobilkommunikations-Empfangssignalen. Insbesondere bezieht sich die Erfindung dabei auf derartige Signalprozessoren und Verfahren, bei denen Mobilkommunikations-Empfangssignale unterschiedlicher Mobilfunkstandards empfangen und mit entsprechenden digitalen Schaltungen ausgewertet werden, die auf einem einzigen Chip integriert sind.

Bei dem derzeit in der Mobilkommunikation verwendeten GSM-Standard wird die sogenannte GMSK-(Gaussian Minimum Shift Keying) Modulation eingesetzt, die einen Signalraum mit Signalpunkten verwendet, die eine Phasendifferenz von 180° aufweisen. Dazu wurde der Paketdienst GPRS (General Packet Radio Service) entwickelt, bei dem mit höheren Datenraten gearbeitet werden kann. Als weiterer derzeit benutzter Standard ist der TIA/EIA-136-(IS-136-)Standard bekannt, bei welchem ein π/4-DQPSK-(D-Quarternär-PSK)-Modulationsverfahren für die Erzeugung der Sendesignale eingesetzt wird. Gewissermaßen als Übergangsstandard zwischen GSM und GPRS einerseits und UMTS andererseits wurde der Standard EDGE sowie der zugehörige Paketdienst EGPRS (Enhanced GPRS) definiert. Bei EDGE handelt es sich zwar noch um ein TDMA-Verfahren (Time Division Multiple Access), es wird aber bereits von der GMSK-Modulation auf die 8-PSK-Modulation übergegangen. Bei der 8-PSK-Modulation wird ein Signalraum mit 8 Signalpunkten verwendet, wobei die Phasendifferenz zwischen den einzelnen Signalpunkten 45° beträgt.

Ein generelles Ziel in der Mobilkommunikation besteht darin, Mobilkommunikationsgeräte zu entwickeln, die für den Betrieb mit mehreren verschiedenen Mobilfunkstandards ausgelegt sind und die demnach in den verschiedenen Mobilfunksystemen benutzt werden können. In den Basisband-Prozessoren PCI 3700 und PCI 3800 der Firma PrairieComm für GSM und TIA/EIA-136 bzw. für GSM, EDGE und TIA/EIA-136 wird diese Anforderung dadurch erfüllt, daß sowohl bei der Erzeugung wie bei der Auswertung der digitalen Signale für jeden Mobilfunkstandard eine separate spezielle Signalverarbeitungsarchitektur verwendet und mit einer auf den entsprechenden Mobilfunkstandard genau abgestimmten Signaltaktrate versorgt wird.

Ein Problem stellt wie erwähnt hierbei die Tatsache dar, daß auf der Empfangsseite die Auswerteverfahren ebenfalls unterschiedliche Signaltaktraten benötigen. Dieses Problem wurde bisher - wie beispielsweise in den oben erwähnten Basisband-Prozessoren PCI 3700 und PCI 3800 der Firma PrairieComm für GSM und TIA/EIA-136 bzw. für GSM, EDGE und TIA/EIA-136 - wie auf der Senderseite dadurch gelöst, daß mehrere verschiedene Taktfrequenzgeneratoren und entsprechend verschiedene Signalverarbeitungsarchitekturen für die einzelnen Mobilfunkstandards eingesetzt wurden. Dies hat jedoch zur Folge, daß für ähnliche Aufgaben mehrfache Schaltungsblöcke erforderlich sind und mit unterschiedlichen Signaltaktraten versorgt werden müssen. In der Regel bedeutet dies einen erhöhten Bedarf an Bauelementen und an Chipfläche. Der Betrieb mit unterschiedlichen Systemtaktraten erschwert somit die Integration der Funktionen in einem Bauelement. Aufgrund der getrennten Verarbeitung mit unterschiedlichen Taktraten ist es in der Regel auch nicht möglich, die Empfangssignale, die von den Baugruppen zur Umsetzung aus der trägerfrequenten Lage in die äquivalente Tiefpaßlage geliefert werden, über eine einheitliche Schnittstelle zu übergeben, so daß zumeist auch mehrere verschiedene A/D-Umsetzer erforderlich sind, an die die Empfangssignale über mehrere Schnittstellen übergeben werden müssen.

Die vorliegende Erfindung geht somit davon aus, daß Mobilkommunikations-Signale verschiedener Mobilfunkstandards übertragen werden. Ihr liegt dementsprechend die Aufgabe zugrunde, einen Signalprozessor und ein Verfahren zur digitalen Auswertung derartiger Mobilkommunikations-Empfangssignale anzugeben, mit welchen auf einem einzelnen Chip verschiedene Mobilfunkstandards mit einem verringerten Bedarf an Bauelementen und Chipfläche unterstützt werden können.

Diese Aufgabe wird mit den kennzeichnenden Merkmalen der unabhängigen Patentansprüche gelöst.

Ein wesentlicher Gedanke der vorliegenden Erfindung besteht darin, für die Signalverarbeitung der Empfangssignale verschiedener Mobilfunkstandards auf dem Chip nur noch eine einzige, systemunabhängige Taktrate zu generieren und entsprechend nur noch genau einen Taktfrequenzgenerator auf dem Chip anzuordnen.

Wenn die in den von dem Signalprozessor unterstützten Mobilfunkstandards vorgesehenen Zeitraster bzw. Schrittgeschwindigkeiten unterschiedlich sind, was meistens der Fall ist, muß dann eine Umsetzung/Umrechnung der in dem einheitlichen Zeitraster abgetasteten Signale in das jeweilige standardspezifische Zeitraster durchgeführt werden. Diese Umsetzung erfolgt durch mindestens einen steuerbaren Dezimator in einem gemeinsam genutzten Signalverarbeitungspfad, bei welchem das Umsetzungsverhältnis variabel vorgegeben werden kann. Die Steuergröße für das Dezimationsverhältnis kann dabei von einem Phasenakkumulator vorgegeben werden, von dem der Dezimator gesteuert wird.

Ein von einem Phasenakkumulator angesteuerter Dezimator ist im Prinzip bereits in der Dissertation mit dem Titel "Ein digitaler Fernseh- und Tonmodulator für digitale Breitbandverteilnetze" von Dietmar Wenzel beschrieben worden, welche am Institut für Nachrichtenübertragung der Universität Stuttgart erstellt wurde und im VDI-Verlag, Düsseldorf, 1999, in der Reihe 10 Informatik/Kommunikation der Fortschritt-Berichte unter Nr. 617 (ISBN 3-18-361710-2) (nachfolgend mit "Wenzel" bezeichnet) erschienen ist. Diese Dissertation, insbesondere die Abschnitte 3.3 bis 3.7 (Polyphaseninterpolator, M-tel-Bandfilter, Entwurf von M-tel-Band-Tiefpässen, Filterstruktur für M-tel-Bandfilter mit symmetrischer Impulsantwort) und die Abschnitte 6.1. bis 6.5 (asynchrone Abtastratenumsetzung) sowie der Anhang 8 sind für die Anmeldung relevant. Dem in dieser Arbeit entwickelten sogenannten asynchronen Abtastratenumsetzer lag das Problem zugrunde, daß bei der Anordnung von Fernsehkanälen im Frequenzmultiplex mit wachsender Kanalzahl die benötigte Bandbreite und damit auch die erforderliche Abtastfrequenz ansteigt. Vor der Addition der einzelnen frequenzverschobenen Signale und zu übertragenden Signale muß daher eine Erhöhung und Angleichung der Abtastrate stattfinden. Zu diesem Zweck wurden steuerbare Interpolatoren entwickelt, bei denen durch die Ansteuerung mit dem Phasenakkumulator eine Aufwärtstastung der Abtastfrequenz durchgeführt wird.

In der vorliegenden Anmeldung kommen steuerbare Dezimatoren zum Einsatz, die als spezielle Ausführungsform der in der oben genannten Dissertation beschriebenen Interpolatoren angesehen werden können, bei denen durch Ansteuerung mit dem Phasenakkumulator eine Abwärtstastung von dem einheitlichen Zeitraster, welches eine relativ hohe Abtastfrequenz aufweist, auf das Zeitraster des betreffenden Mobilfunkstandards durchgeführt wird, welches eine relativ niedrige Abtastfrequenz aufweist. Daher werden im folgenden die erfindungsgemäßen Dezimatoren auch als Interpolatoren bezeichnet.

Der erfindungsgemäß verwendete Dezimator weist ein steuerbares Dezimationsverhältnis auf und seine Architektur ist vorzugsweise von einfachem Aufbau (bspw. linearer Dezimator), wobei dennoch viele Funktionsblöcke gemeinsam für die unterschiedlichen Signale genutzt werden können.

Mindestens einer der in dem gemeinsamen Signalverarbeitungspfad angeordneten Interpolatoren kann beispielsweise durch einen sogenannten FIR-(Finite impulse response) Interpolationsfilter gebildet sein. Diese Filter können als sogenannte M-tel-Bandfilter ausgebildet sein, die eine Interpolation um den Faktor M = L durchführen, wobei L die Anzahl Zweige in der Filterstruktur des Polyphaseninterpolators ist.

Die Erfindung vermeidet somit die Notwendigkeit der Anordnung einer der Anzahl der unterstützten Mobilfunkstandards entsprechenden Anzahl von Taktfrequenzgeneratoren und Signalverarbeitungszweigen, da ein unverzweigter, von den Mobilfunkstandards gemeinsam genutzter Signalverarbeitungspfad mit einem einheitlichen Systemtakt versorgt werden kann. Weiterhin können die Baugruppen zur Kanalselektion, Frequenzumsetzung, A/D-Umsetzung, Abtastratenumsetzung, Frequenzversatzkorrektur etc. ebenfalls für alle Signalverarbeitungspfade gemeinsam genutzt werden.

Der erfindungsgemäße Dezimator führt die Empfangssignale aus einem einheitlichen Zeitraster in jeweils standardspezifische "Virtuelle" Zeitraster über. Diese "virtuellen Abtastfrequenzen", die Abtastfrequenzen bezeichnen, mit denen ein D/A-Umsetzer die Abtastwerte in äquivalente analoge Signale umsetzen müßte, sind nicht immer Teiler der gemeinsamen Systemtaktfrequenz und gleichwohl können alle Schaltungsblöcke vorteilerhafterweise mit derselben Systemtaktfrequenz betrieben werden.

Durch die erfindungsgemäße Signalverarbeitungsstruktur wird eine Integration der Blöcke in einem integrierten Schaltkreis, insbesondere im Hinblick auf die Synthese, die Testbarkeit, das Layout, etc. erheblich vereinfacht.

Da die Empfangssignale zunächst in einem einheitlichen Zeitraster verarbeitet werden, wird jeweils für die I- und Q-Komponente nur ein A/D-Umsetzer für die Empfangssignale benötigt und die Empfangssignale können über ein und dieselbe Schnittstelle an die Baugruppen zur Umsetzung der trägerfrequente Lage in die Tiefpaßsignals übergeben werden.

Die Erfindung kann insbesondere für die Mobilfunkstandards GSM, EDGE und TIA/EIA-136 oder Mischformen oder Teilkombinationen daraus verwendet werden.
. Im folgenden werden Ausführungsbeispiele der Erfindung anhand der Figuren näher erläutert. Es zeigen :
   - Fig.1: ein schematisches Blockschaltbild des Analogteils einer mehrere Mobilfunkstandards unterstützende Empfangseinheit einer Mobilstation;
   - Fig.2: ein schematisches Blockschaltbild des Digitalteils einer erfindungsgemäßen mehrere Mobilfunkstandards unterstützenden Empfangs-Signalverarbeitungsstruktur einer Mobilstation;
   - Fig.3: ein schematisches Blockschaltbild des Digitalteils eines erfindungsgemäßen, mehrere Mobilfunkstandards unterstützenden Empfangs-Signalprozessors einer Mobilstation;
   - Fig.4: ein schematisches Blockschaltbild eines asynchronen Dezimators.

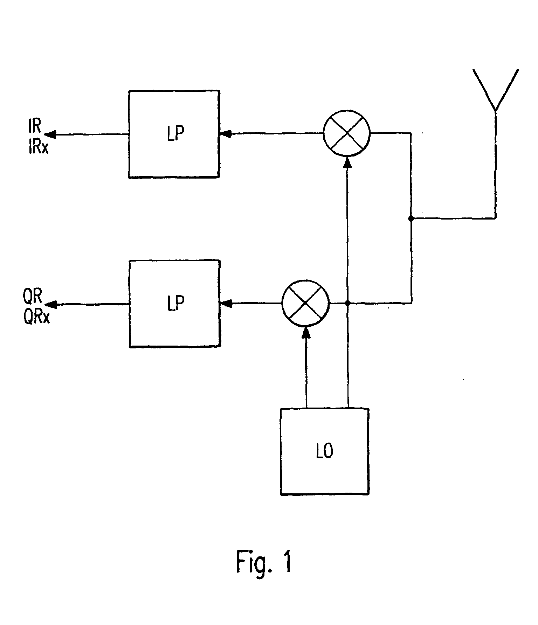

In Fig.1 ist der Analogteil einer Empfangseinheit für mehrere Mobilfunkstandards dargestellt. Dieses Beispiel betrifft eine Signalverarbeitungsstruktur bzw. eines Signalprozessors, welche(r) die drei eingangs beschriebenen Mobilfunkstandards GSM, EDGE und TIA/EIA-136 unterstützt und dabei einen einzigen Taktfrequenzgenerator der Systemtaktfrequenz 104 MHz aufweist. Die Mobilfunkstandards arbeiten dabei mit den folgenden, eingangs bereits erwähnten und an sich bekannten Modulationsverfahren, Datenraten und Symbolraten:

| Standard | Modulation | Datenrate | Symbolrate |
|---|---|---|---|
| GSM | GMSK | 270,83 kbit/s | 270,83 kHz |
| EDGE | 3π/8-8-PSK | 812,5 kbit/s | 270,83 kHz |
| TIA/EIA-136 | π/4-DQPSK | 48,6 kbit/s | 24,3 kHz |

Nach dem Empfang des auszuwertenden Signals wird dieses in die I- und Q-Komponenten aufgespalten, indem das Signal in jedem dieser Zweige mit der Frequenz eines Lokaloszillators gemischt wird. Jede der Komponenten wird danach einem Tiefpaßfilter (LP) zugeführt, wobei diese Tiefpaßfilter in den Signalverarbeitungspfaden den Abschluß des Analogteils bilden.

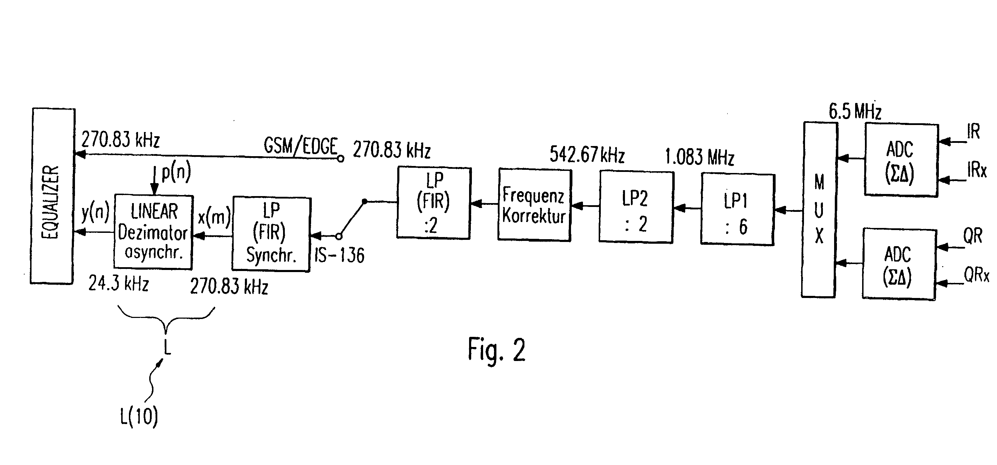

In der Fig.2, die den Digitalteil eines erfindungsgemäßen Signalprozessors darstellt, sind die einzelnen Funktionsblöcke eines Digitalteils gezeigt, die mit der einheitlichen von einem Taktfrequenzgenerator (nicht dargestellt) erzeugten Systemtaktfrequenz von beispielsweise 104 MHz betrieben werden sollen. Die im rechten Teil der Figur dargestellten A/D-Umsetzer (ADC) für die I- und Q-Komponenten werden mit einem aus dem Systemtakt abgeleiteten 16-fach langsameren Takt betrieben. Die Ausgangssignale der ADCs werden anschließend einem Multiplexer (MUX) zugeführt. Das Ausgangssignal des Multiplexers wird dann in zwei hintereinander geschalteten LP-Filtern in seiner Abtastfrequenz zunächst um den Faktor 6 und dann um den Faktor 2 vermindert. Nach einer anschließenden Frequenzkorrektur wird das Signal dann in einem LP/FIR-Filter in seiner Abtastfrequenz weiter um den Faktor 2 verringert.

Anschließend verzweigt der Signalverarbeitungspfad mittels eines Schalters in einen Pfad für die Standards GSM und EDGE und einen Pfad für den Standard TIA/EIA-136. Dies ist bei dem vorliegenden Ausführungsbeispiel erforderlich, da GSM- und EDGE-Signale auf demselben standardisierten Zeitraster basieren, während IS-136-Signale davon abweichen. Vor dem Entzerrer/Dekodierer (EQUALIZER) findet daher bei IS-136-Signalen eine Dezimation statt, die in einen synchronen und einen asynchronen Teil 10 aufgeteilt ist. Im Fall des IS-136-Signals bewirkt das Filter LP (FIR, synchron) eine Bandbegrenzung derart, daß der abgetrennte Teil lediglich aus einem linearen Interpolator bestehen kann (s. Abschnitte 3.3, 3.4 in "Wenzel").

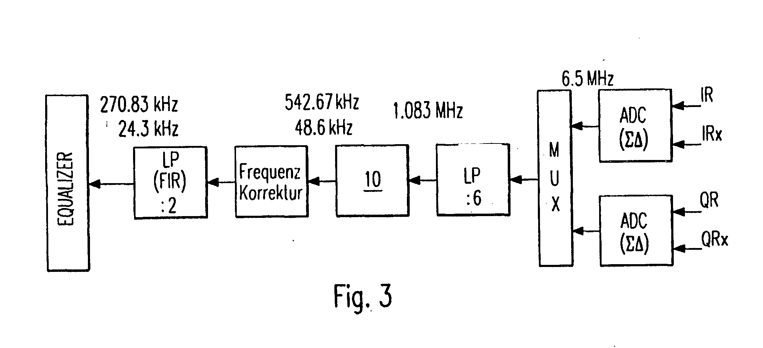

In der Fig.3 ist ein erfindungsgemäßer Digitalteil eines mehrere Mobilfunkstandards unterstützenden Empfangs-Signalprozessors dargestellt. In diesem Ausführungsbeispiel ist das für den Standard TIA/EIA-136 spezifische "virtuelle" Zeitraster aufgrund der Symbolrate von 24,3 kHz festgelegt.

Bei der Schaltung nach Fig.3 ist im Gegensatz zu dem Digitalteil der Fig.2 eine Verzweigung des Signalverarbeitungspfades nicht erforderlich. Diese Schaltung enthält einen steuerbaren Dezimator 10, dessen Dezimationsverhältnis in einem größeren Bereich einstellbar ist. Der Dezimator 10 ist in dem Signalverarbeitungspfad hinter dem Multiplexer MUX und dem ersten LP-Filter (Teilung um Faktor 6) und vor der Frequenzkorrekturschaltung angeordnet. Durch den Dezimator 10 ist eine Verzweigung des Signalverarbeitungspfades nicht notwendig. Statt dessen muß der Dezimator derart ausgelegt sein, daß das Dezimationsverhältnis an das jeweilige Empfangssignal angepaßt werden kann und weiterhin muß die Verarbeitungsgeschwindigkeit der nachfolgenden Blöcke entsprechend kontrolliert werden können. Die bei dieser Struktur nicht für alle Standards gleich ausgeprägte Bandbegrenzung erfordert als Dezimator 10 einen Interpolator höherer, beispielsweise dritter Ordnung. Entsprechend ist ein Dezimationsfaktor zwischen 2 und 23 variabel einstellbar.

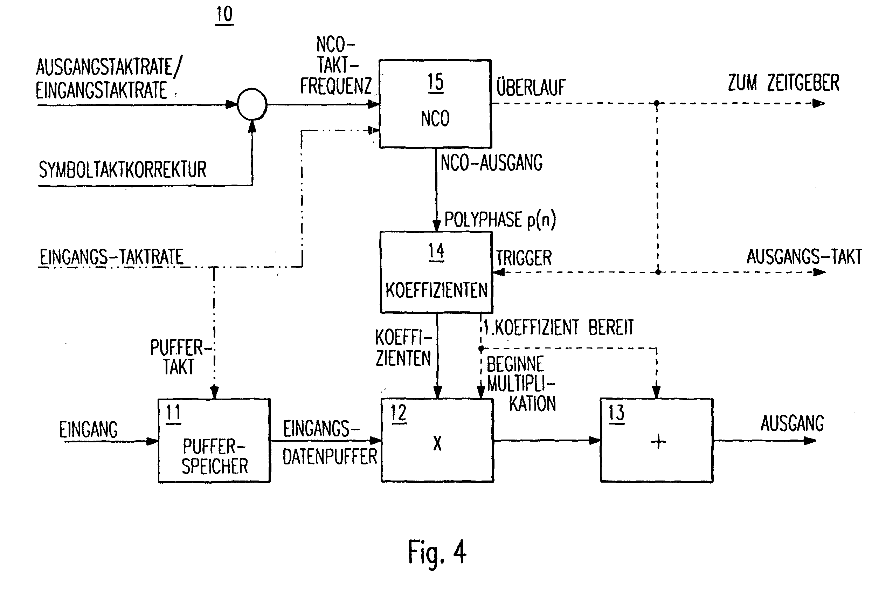

In der Fig.4 ist ein prinzipielles Blockschaltbild eines asynchronen Dezimators 10 dargestellt. Dieser enthält einen Datenpuffer 11, einen Multiplizierer 12, ein Addierwerk 13, einen Koeffizientenspeicher 14 sowie einen NCO bzw. einen Phasenakkumulator 15, der die Auswahl der Koeffizienten anhand einer vorgebbaren Steuergröße kontrolliert.

## Patentansprüche

1. Signalprozessor zur digitalen Auswertung von Mobilkommunikations-Empfangssignalen, die zu einer Mehrzahl verschiedener Mobilfunkstandards kompatibel sind, mit
- genau einem Taktfrequenzgenerator für die Signalverarbeitung der Empfangssignale verschiedener Mobilfunkstandards; und
- mindestens einem steuerbaren Dezimator (10) für die Umsetzung der in einem einheitlichen Zeitraster abgetasteten Empfangssignale auf standardspezifische Zeitraster,
**dadurch gekennzeichnet, dass**
- der Dezimator (10) einen Phasenakkumulator (15), einen Koeffizientenspeicher (14), einen Pufferspeicher (11), einen Multiplizierer (12) und ein Addierwerk (13) aufweist,
- ein Ausgang des Phasenakkumulators (15) mit einem Eingang des Koeffizientenspeichers (14) verbunden ist, wobei der Phasenakkumulator (15) die Auswahl der Koeffizienten anhand einer vorgebbaren Steuergröße steuert,
- die Eingangsdaten dem Pufferspeicher (11) zugeführt werden, ein Ausgang des Pufferspeichers (11) mit einem ersten Eingang des Multiplizierers (12) verbunden ist, ein Ausgang des Koeffizientenspeichers (14) mit einem zweiten Eingang des Multiplizierers (12) verbunden ist, und ein Ausgang des Multiplizierers (12) mit einem Eingang des Addierwerks (13) verbunden ist, welches die Terme aufaddiert und das Ergebnis einem Ausgang zuführt.

2. Signalprozessor nach Anspruch 1,
**gekennzeichnet durch**
- eine einheitliche Schnittstelle zur Übergabe der Empfangssignale an die Baugruppen zur Umsetzung des trägerfrequenten Signals in die Tiefpaßlage.

3. Signalprozessor nach Anspruch 2,
**dadurch gekennzeichnet, dass**
- die Schnittstelle zwei analoge oder digitale Signale in Form einer Normal- und Quadraturkomponente oder Amplituden- und Phasenkomponente beinhaltet.

4. Signalprozessor nach einem der vorhergehenden Ansprüche,
**dadurch gekennzeichnet, dass**
- der Taktfrequenzgenerator und die Signalverarbeitungeschaltungen auf einem gemeinsamen Chip angeordnet sind.

5. Verfahren zur digitalen Auswertung von Mobilkummunikations-Empfangssignalen, die zu einer Mehrzahl verschiedener Mobilfunkstandards kompatibel sind, wobei
- eine standardunabhängige Taktfrequenz für die Signalverarbeitung der Empfangssignale erzeugt wird, in dem
- mindestens ein steuerbarer Dezimator (10) für die Umsetzung der in einem einheitlichen Zeitraster abgetasteten Empfangssignale auf standardspezifische Zeitraster eingesetzt wird,
**dadurch gekennzeichnet, dass**
der Dezimator (10) durch einen Phasenakkumulator (15) gesteuert wird, und des Weiteren einen Koeffizientenspeicher (14), einen Pufferspeicher (11), einen Multiplizierer (12) und ein Addierwerk (13) aufweist,
- ein Ausgang des Phasenakkumulators (15) mit einem Eingang des Koeffizientenspeichers (14) verbunden ist, wobei der Phasenakkumulator (15) die Auswahl der Koeffizienten anhand einer vorgebbaren Steuergröße steuert,
- die Eingangsdaten dem Pufferspeicher (11) zugeführt werden, ein Ausgang des Pufferspeichers (11) mit einem ersten Eingang des Multiplizierers (12) verbunden ist, ein Ausgang des Koeffizientenspeichers (14) mit einem zweiten Eingang des Multiplizierers (12) verbunden ist, und ein Ausgang des Multiplizierers (12) mit einem Eingang des Addierwerks (13) verbunden ist, welches die Terme aufaddiert und das Ergebnis einem Ausgang zuführt.

6. Verfahren nach Anspruch 5,
**gekennzeichnet durch**
- die Empfangssignale **durch** eine einheitliche Schnittstelle an die Baugruppen zur Umsetzung des trägerfrequenten Signals in die Tiefpaßlage übergeben werden.

7. Verfahren nach einem der Ansprüche 5 oder 6,
**dadurch gekennzeichnet, dass**
es für die Mobilfunkstandards GSM, EDGE und TIA/EIA-136 oder Mischformen/Teilkombinationen daraus verwendet wird.

8. Verfahren nach einem der Ansprüche 5 bis 7,
**dadurch gekennzeichnet, dass**
- Schaltungskomponenten im Signalverarbeitungspfad, insbesondere zur Kanalselektion, Frequenzumsetzung, Abtastratenumsetzung, A/D-Umsetzung, Rauschformung sowie Phasen- und Frequenzkorrektur für mehrere Mobilfunkstandards gemeinsam genutzt werden.

## Claims

1. Signal processor for the digital evaluation of mobile communications reception signals which are compatible with a multiplicity of different mobile phone standards, having
- precisely one clock frequency generator for processing the reception signals of various mobile phone standards, and
- at least one controllable decimator (10) for transposing the reception signals sampled in a uniform time frame into standard-specific time frames, **characterized in that**
- the decimator (10) has a phase accumulator (15), a coefficient memory (14), a buffer memory (11), a multiplier (12) and an adder unit (13),
- an output of the phase accumulator (15) is connected to an input of the coefficient memory (14), the phase accumulator (15) controlling the selection of the coefficients by means of a predefinable control variable,
- the input data is fed to the buffer memory (11), an output of the buffer memory (11) is connected to a first input of the multiplier (12), an output of the coefficient memory (14) is connected to a second input of the multiplier (12), and an output of the multiplier (12) is connected to an input of the adder unit (13) which adds the terms and feeds the result to an output.

2. Signal processor according to Claim 1, **characterized by**
- a uniform interface for transferring the reception signals to the assemblies for transposition of the carrier-frequency signal into the low pass position.

3. Signal processor according to Claim 2, **characterized in that**
- the interface contains two analog or digital signals in the form of a normal component and quadrative component or amplitude component and phase component.

4. Signal processor according to one of the preceding claims, **characterized in that**
- the clock frequency generator and the signal processing circuits are arranged on a common chip.

5. Method for the digital evaluation of mobile communications reception signals which are compatible with a multiplicity of various mobile phone standards,
- a standard-independent clock frequency being generated for the signal processing of the reception signals,
- at least one controllable decimator (10) being used for transposing the reception signals sampled in a uniform time frame into standard-specific time frames, **characterized in that**
- the decimator (10) is controlled by a phase accumulator (15) and furthermore has a coefficient memory (14), a buffer memory (11), a multiplier (12) and an adder unit (13),
- an output of the phase accumulator (15) is connected to an input of the coefficient memory (14), the phase accumulator (15) controlling the selection of the coefficients by means of a predefinable control variable,
- the input data is fed to the buffer memory (11), an output of the buffer memory (11) is connected to a first input of the multiplier (12), an output of the coefficient memory (14) is connected to a second input of the multiplier (12), and an output of the multiplier (12) is connected to an input of the adder unit (13) which adds the terms and feeds the result to an output.

6. Method according to Claim 5, **characterized in that**
- the reception signals are transferred by means of a uniform interface to the assemblies for transposing the carrier-frequency signal into the low pass position.

7. Method according to either of Claims 5 and 6, **characterized in that**
it is used for the GSM, EDGE and TIA/EIA-136 mobile phone standards or mixed forms/partial combinations thereof.

8. Method according to one of Claims 5 to 7, **characterized in that**
- circuit components in the signal processing path are used jointly in particular for channel selection, frequency conversion, sampling rate conversion, A/D conversion, noise shaping and phase and frequency correction for a plurality of mobile phone standards.

## Revendications

1. Processeur de signal pour l'évaluation numérique de signaux reçus de communication mobile qui sont compatibles avec plusieurs standards de radiocommunication mobile différents, comprenant
- exactement un générateur de fréquence d'horloge pour le traitement des signaux reçus de différents standards de radiocommunication mobile ; et
- au moins un décimateur commandable (10) pour la conversion des signaux reçus échantillonnés selon une trame temporelle uniforme en signaux échantillonnés selon des trames temporelles spécifiques aux standards,
**caractérisé par le fait que**
- le décimateur (10) comporte un accumulateur de phase (15), une mémoire de coefficients (14), une mémoire tampon (11), un multiplicateur (12) et un additionneur (13),
- une sortie de l'accumulateur de phase (15) est reliée à une entrée de la mémoire de coefficients (14), l'accumulateur de phase (15) commandant la sélection des coefficients à l'aide d'une grandeur de commande pouvant être prescrite,
- les données d'entrée sont envoyées à la mémoire tampon (11), une sortie de la mémoire tampon (11) est reliée à une première entrée du multiplicateur (12), une sortie de la mémoire de coefficients (14) est reliée à une deuxième entrée du multiplicateur (12) et une sortie du multiplicateur (12) est reliée à une entrée de l'additionneur (13) qui additionne les termes et qui envoie le résultat à une sortie.

2. Processeur de signal selon la revendication 1,
**caractérisé par le fait que**
- une interface uniforme pour le transfert des signaux reçus aux modules pour la conversion du signal à fréquence porteuse dans le domaine passe-bas.

3. Processeur de signal selon la revendication 2,
**caractérisé par le fait que**
- l'interface contient deux signaux analogiques ou numériques sous forme d'une composante normale et d'une composante en quadrature ou composante d'amplitude et composante de phase.

4. Processeur de signal selon l'une des revendications précédentes,
**caractérisé par le fait que**
- le générateur de fréquence d'horloge et les circuits de traitement de signal sont montés sur une puce commune.

5. Procédé pour l'évaluation numérique de signaux reçus de communication mobile qui sont compatibles avec plusieurs standards de radiocommunication mobile différents, dans lequel
- on produit une fréquence d'horloge indépendante du standard pour le traitement des signaux reçus,
- au moins un décimateur commandable (10) étant utilisé pour la conversion des signaux reçus échantillonnés selon une trame temporelle uniforme en signaux échantillonnés selon des trames temporelles spécifiques aux standards,
**caractérisé par le fait que**
- le décimateur (10) est commandé par un accumulateur de phase (15) et comporte par ailleurs une mémoire de coefficients (14), une mémoire tampon (11), un multiplicateur (12) et un additionneur (13),
- une sortie de l'accumulateur de phase (15) est reliée à une entrée de la mémoire de coefficients (14), l'accumulateur de phase (15) commandant la sélection des coefficients à l'aide d'une grandeur de commande pouvant être prescrite,
- les données d'entrée sont envoyées à la mémoire tampon (11), une sortie de la mémoire tampon (11) est reliée à une première entrée du multiplicateur (12), une sortie de la mémoire de coefficients (14) est reliée à une deuxième entrée du multiplicateur (12) et une sortie du multiplicateur (12) est reliée à une entrée de l'additionneur (13) qui additionne les termes et qui envoie le résultat à une sortie.

6. Procédé selon la revendication 5,
**caractérisé par le fait que**
- les signaux reçus sont transférés par une interface uniforme aux modules pour la conversion du signal à fréquence porteuse dans le domaine passe-bas.

7. Procédé selon l'une des revendications 5 ou 6,
**caractérisé par le fait que**
- il est utilisé pour les standards de radiocommunication mobile GSM, EDGE et TIA/EIA - 136 ou des formes mixtes ou combinaisons partielles de ceux-ci.

8. Procédé selon l'une des revendications 5 à 7,
**caractérisé par le fait que**
- des composants de circuit dans la voie de traitement de signal, notamment pour la sélection de canal, la conversion de fréquence, la conversion de taux d'échantillonnage, la conversion analogique- numérique, la mise en forme du bruit ainsi que la correction de phase et de fréquence sont utilisés conjointement pour plusieurs standards de radiocommunication mobile.
